Europäisches Patentamt

European Patent Office

Office européen des brevets

(19)

(11) EP 1 466 864 A2

(12) **EUROPEAN PATENT APPLICATION**

(43) Date of publication:
13.10.2004 Bulletin 2004/42

(51) Int Cl.⁷: **C01B 3/38**, B01J 19/24

(21) Application number: 04076094.4

(22) Date of filing: 08.04.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 09.04.2003 IT mi20030710
09.04.2003 IT mi20030711

(71) Applicant: Forni-Tecnica S.r.l.
20125 Milan (IT)

(72) Inventors:
• **Zamboni, Alberto**
20155 Milan (IT)
• **Spagocci, Stefano Maria**
20092 Cinisello Balsamo (Milan) (IT)
• **Teruzzi, Alessandro**
20060 Cassina de'Pecchi (Milan) (IT)

(74) Representative: **De Gregori, Antonella**
**Ing. Barzano & Zanardo Milano S.p.A.**
**Via Borgonuovo 10**
**20121 Milano (IT)**

(54) **Method, system and plant for regulating a gas generator**

(57) System for regulating a gas generation plant, such plant comprising a primary circuit and a secondary circuit, fed by reactants. Such a system comprises devices for regulating plant working parameters and a programmable logical unit that regulates such regulating devices and comprises a pre-stored mathematical model, aimed at calculating values for such working parameters, on the basis of a user-defined useful output gas chemical composition and flow rate.

Fig. 2

O2=2u.a. - T=1300 K - Air with 21 % of O2

CH4 of primary circuit (u.a.) - P=1.015 atm, V=481.175 l

EP 1 466 864 A2

**Description**

The present invention relates to a method and system for regulating a gas generator and a plant for gas generation.

In particular, the present invention relates to a gas generation plant, able to deliver the required gas chemical composition and flow rate.

The regulated gas generation plant is, for instance, a metal heat treatment gas generator, in which the produced gas mainly comprises carbon monoxide.

Two-stage plants for gas generation, comprising a primary circuit and a secondary circuit are known at the present state of the art.

In the primary circuit, methane gas (or other hydrocarbons) are burned in air, so as to form a combustion gas, mainly composed of carbon dioxide, water and nitrogen. The reaction taking place in such primary circuit are exothermic reactions and the produced heat supplies the energy needed by the reaction taking place in the secondary circuit, that are instead endothermic.

Between the primary circuit and the secondary circuit a cooling tower is placed, whose aim is to filter the water vapour generated by the combustion in the primary circuit.

In the secondary circuit, the gas coming out of the cooling tower is made to react with further methane gas by a catalyst system made up of cubes impregnated by nickel oxide. The reaction between carbon dioxide and methane, known as methane reforming, generates a gas mainly composed by about 17% carbon monoxide, 20% hydrogen and 63% nitrogen.

Gas generators in which the secondary circuit is based on partially exothermic reactions (methane partial oxidation), such that methane and air directly react on a nickel-oxide-based catalyst system, thus producing a gas mainly composed by about 20% carbon monoxide, 40% hydrogen and 40% nitrogen, are also known. In this case, a further secondary circuit heating system is needed.

Applicant has observed that such gas generation plants are sometimes stabilised by regulation systems, so that their performance is constant in time, despite fluctuations due, for instance, to the quality and pressure of the methane coming from the distribution network and to the cooling tower water temperature. However, such state-of-the-art plants are essentially compelled to work at a single gas flow rate and chemical composition (analysis) and only small corrections can be performed manually.

Moreover, the above-mentioned state-of-the-art gas generation plant is not flexible enough (both in flow rate and analysis) with respect to the user needs, that are typically varying in time.

Applicant has found that, by varying the primary circuit input parameters and the secondary circuit input parameters, through, for instance, a programmable logical unit, on the basis of a pre-stored mathematical model, through, for instance, pre-calculated tables, it is possible to obtain the sought useful plant output gas (carbon monoxide) percentage and flow rate. Moreover, through such regulations it is possible to keep such useful plant output gas (carbon monoxide) percentage and flow rate essentially constant, despite any undesired fluctuations.

Moreover, Applicant has built a heat generation plant making use of filtering devices, for instance kinetic effect membranes, associated to either the primary circuit or the secondary circuit, so as to increase the useful plant output gas (carbon monoxide) percentage. Together with the filtering devices, or in addition to them, with the same purpose to increase the useful plant output gas (carbon monoxide) percentage, carbon dioxide is also added in the primary and/or secondary circuit. Moreover, such plant can be operated either in an endothermic mode, in which an endothermic reaction (methane reforming) takes place in the secondary circuit, or in a partially endothermic mode, in which a partially endothermic reaction (methane partial oxidation, with air added in the secondary circuit) takes place in the secondary circuit. The plant can switch in a continuous fashion between a functioning mode in which the gases coming from the primary circuit are mainly added in the secondary circuit without air addition (endothermic reaction) and a functioning mode in which the gases coming from the primary circuit are fully expelled from the system (so that the primary circuit has the only aim of heating the secondary circuit) and further air is introduced into the secondary circuit, so that a partially endothermic reaction is achieved.

An embodiment of the present invention is a plant comprising a primary circuit and a secondary circuit, fed by reactants comprising methane, air and carbon dioxide, through a plurality of inlet ducts, such primary circuit comprising a burner, in which combustion of at least part of such reactants takes place, whose combustion products may feed a secondary reactor, such secondary reactor comprising a retort, equipped with a catalyst system, in which a continuously variable part of such combustion products and a further part of such reactants react in such a way as to produce said gas, characterised in that devices filtering nitrogen out of air are embedded in at least one of said inlet ducts for said reactants, and/or by the presence of further ducts for feeding the plant with carbon dioxide.

A further embodiment of such invention is a method for regulating a heat generation plant, such plant comprising a primary circuit and a secondary circuit fed by reactants, characterised in that it comprises the following steps:

  selecting a pre-defined useful output gas percentage and flow rate,
  elaborating a pre-stored mathematical model, so as to calculate working parameter values, associated to said reactants that, in turn, feed said primary circuit and said secondary circuit, on the basis of such pre-defined percentage,
regulating the flow rate of such reactants in said primary and secondary circuits on the basis of such parameter values.

A further embodiment of the present invention is a system for regulating a gas generation plant, such plant comprising a primary circuit and a secondary circuit, fed by reactants, characterised in that it comprises devices for regulating plant working parameters and a programmable logical unit that regulates such regulating devices and comprises a pre-stored mathematical model, aimed at calculating values for such working parameters, on the basis of a user-defined useful output gas chemical composition and flow rate.

Further objects and advantages of the present invention shall become clear from the description below and appended drawings, provided purely as a non-limiting explanatory example, in which:

figure 1 is a layout for a heat generation plant according to the present invention, to which the regulation system is added;
figure 2 is a plot representing the reactions in the primary circuit;
figure 3 is a plot representing the reactions in the secondary circuit when soot is not present;

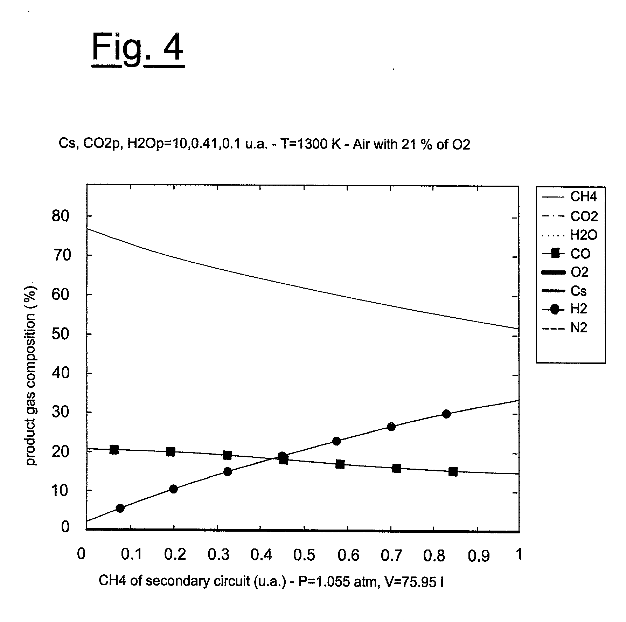

figure 4 is a plot representing the reactions in the secondary circuit when soot is present.

Such primary and secondary circuits are fed by reactants introduced into the plant by a plurality of inlet ducts, while an output duct takes out the produced gas.

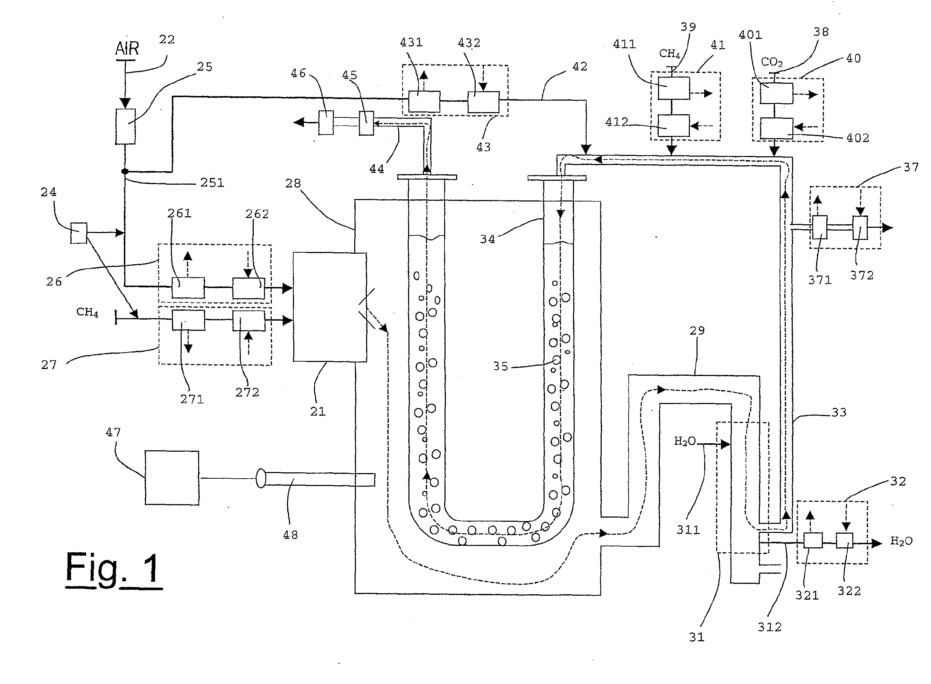

In the example of figure 1 the primary comprises a burner 21, fed by such reactants comprising, for instance, methane and air. Such reactants are introduced into the burner through a first inlet duct 22 and a second inlet duct 23. A first pressure regulator 24 selects the air/methane mixing ratio. Moreover, a first filtering device 25, comprising a membrane comprising, in turn, a compressor and a shunting device 251, is forecast on said first duct. Preferably, such membrane is of the nitrogen-filtering type.

Along the first duct 22, first air regulation devices 26 are placed, comprising, in turn, an air throughput sensor 261 and a regulation electrovalve 262.

Along the second duct 23, second methane regulation devices 27 are placed, comprising, in turn, a methane throughput sensor 271 and a regulation electrovalve 272.

In such a burner 21, combustion of such a mixture is performed, so as to produce a combustion gas essentially composed by carbon dioxide, water and nitrogen, that is in turn stored into a vessel 28, named primary reactor.

The secondary circuit comprises a heat exchanger 31 (comprising, in turn, a condensed water drain), that is fed by the gas coming out of said vessel 28, through a fitting 29. Said heat exchanger 31 comprises a cooling water inlet 311 and an outlet duct 312, along which third regulation devices 32 are placed, comprising, in turn, a water throughput sensor 321 and a regulation electrovalve 322.

An outlet duct 33 connects said heat exchanger 31 to a retort 34, preferable U-shaped, inside which a catalyst system 35 is placed.

Said retort 34 is placed inside said vessel 28.

Along said heat exchanger outlet duct 33, a vent 36 is preferably placed, linked to fourth regulation devices 37, comprising, in turn, a combustion gas throughput sensor 371 and a three-way continuous electrovalve 372. Said three-way continuous electrovalve 372 allows introduction into the secondary circuit of primary circuit combustion product percentages continuously varying from 0% to 100%.

Moreover, preferably downstream said vent 36, a third plant inlet duct 38, aimed at introducing carbon dioxide into duct 33 and a fourth plant inlet duct 39, aimed at introducing methane into duct 33, are placed along said outlet duct 33. Along said third and fourth inlet ducts 38 and 39, fifth 40 and sixth 41 regulation devices, both comprising a throughput sensor (for carbon dioxide 401 and methane 411) and a regulation electrovalve 402 and 412, are placed.

A fifth inlet duct 42 introduces air into said duct 33. Such duct is preferably a branch of said first inlet duct 22, made up of said switching device 251. Along such fifth inlet duct 42, seventh regulation devices 33 are envisaged, comprising, in turn, an air throughput sensor 431 and a regulation electrovalve 432.

Coming out of said retort 34, a plant outlet duct 24 allows extraction of the gas produced by the plant. Along such outlet duct 44, a heat exchanger 45 is envisaged, whose aim is to cool the produced gas.

In plant applications aimed at hydrogen gas production, a second filtering device 46 is envisaged, comprising, in turn, a membrane equipped with a compressor.

Said primary reactor 28 is heated by the gases generated by the combustion reactions taking place in burner 21 and a temperature regulation device 47, equipped with a thermocouple 48, keeps primary reactor temperature constant.

The plant works in the following way.

Suppose one wants to produce carbon monoxide (CO) in the plant: the reactants to introduce into the plant are then methane, air, carbon dioxide as well as cooling water.

The main reaction taking place in said primary circuit is:

$$8N_2 + CH_4 + 2O_2 \rightarrow 8N_2 + CO_2 + 2H_2O \quad (1)$$

Such a reaction describes a primary circuit operated in the traditional mode.

Applicant has verified that a further reaction acquires importance when the air/methane ratio is less than 10 (i.e. in excess of methane). Such reaction, methane partial oxidation, is given by:

$$2N_2 + CH_4 + \tfrac{1}{2}O_2 \rightarrow 2N_2 + CO + 2H_2 \qquad (2).$$

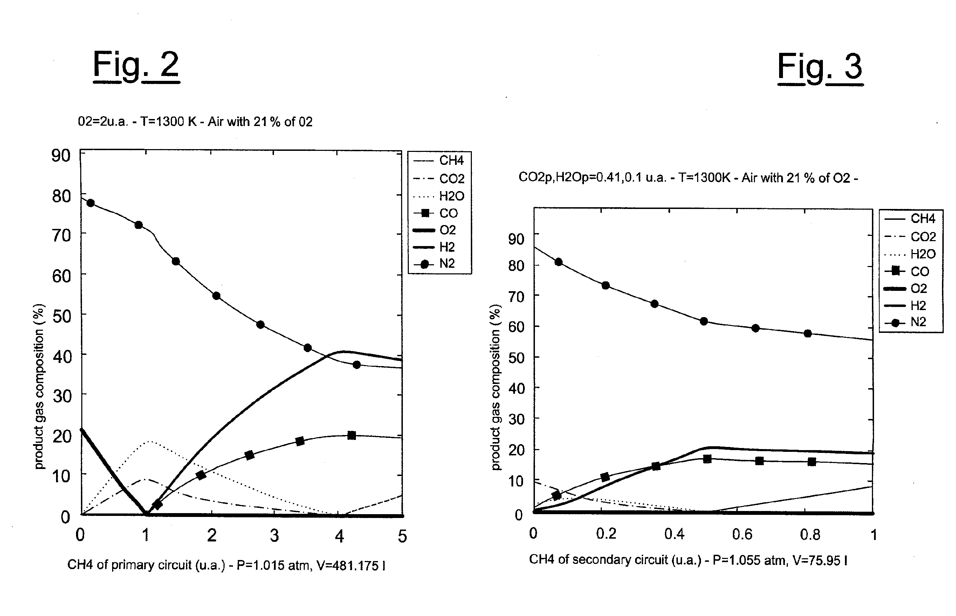

The plot of figure 2 shows how, by working in excess of methane, the above-mentioned reaction starts to influence the produced CO percentage and, when the air/methane ratio is 2.5, a gas composed of 20% CO, 40% $H_2$, 40% $N_2$, is produced. It is then possible to work in excess of methane (up to an air/methane ratio of about 5), so as to insert further CO into the secondary circuit, thus increasing the CO percentage produced by the generator. The regulation system of the present invention allows to regulate reactant flow rates, so as to achieve a better carbon monoxide concentration.

The main secondary circuit reaction is the so-called "methane dry reforming", wherein methane introduced into the secondary circuit reacts with the carbon dioxide produced in the primary circuit:

$$CH_4 + CO_2 \rightarrow 2CO + 2H_2 \qquad (3)$$

A further reaction taking place in the secondary circuit, in which the residual water vapour is instead involved, is the so-called "methane steam reforming", namely:

$$CH_4 + H_2O \rightarrow CO + 3H_2 \qquad (4)$$

Both reactions essentially proceed to completion rightwards, so that it is usually claimed that, in order to eliminate the residual water vapour coming from the cooling tower (about 1% in volume in standard conditions), it is merely needed to feed the secondary circuit with equal quantities of methane and water, as shown by reaction (4).

Actually, Applicant, by simulating reactions (3) and (4), has found that their equilibrium constants have quite similar values, so that the so-called "shift reaction":

$$CO + H_2O \rightarrow CO_2 + H_2 \qquad (5)$$

has an equilibrium constant of order one.

Water, then, is not wholly eliminated and the optimal working conditions are quite similar, but not exactly, what one would suppose based upon system stechiometry. See figure 3 for a typical simulation of the secondary circuit. The maximum CO percentage allowable with the above-mentioned reactions is about 17%.

It is known that the residual methane coming from the previously mentioned reactions (methane reforming) decays (cracks) into solid-state carbon (soot). The reaction is:

$$CH_4 \rightarrow C(s) + 2H_2 \qquad (6)$$

Soot is usually thought to be harmful to the generator, since it clogs the catalyst system.

Applicant has instead observed that soot may be beneficial, in the sense of increasing CO percentage in the produced gas. The following reaction, in fact, takes place with carbon dioxide:

$$C(s) + CO_2 \rightarrow 2CO \qquad (7)$$

and another, less important, reaction takes place with water vapour:

$$C(s) + H_2O \rightarrow CO + H_2 \qquad (8)$$

There are also indications that the characteristic time-scale of such reactions is much larger than generator transit time, since one only finds a weak dependence of final product concentration on inlet flow.

Formally, then, the system works as if reactions (3), (4) and (5) first take place and then, in a fictitious reactor placed in series with the secondary reactor, the residual methane decays and the soot thus produced completely reacts with the produced carbon dioxide and water, thus enriching the mixture in CO. Applicant has observed that, through a porous graphite block placed into the secondary circuit retort, it is possible to increase the produced CO percentage, by said reactions (7) and (8).

According to the present invention, the burner also allows to work in excess of methane, up to about twice the ordinary methane/air ratio. It is then possible to introduce further CO into the secondary circuit.

In the heat exchanger, there is no contact between cooling water and the gas flow. Such lack of contact between cooling water and gas makes us presume that a better gas dehydrating capability maybe achieved.

The catalyst system employed comprises a plurality of spheres impregnated with nickel oxide, in contrast to the prior art catalyst systems, wherein cubes are employed that, however tend to crumble. The spheres tend to crumble much less and have a much higher active site density. According to that, it has been verified that the usage of spheres makes generator performance much more stable.

The usage of cylindrical metal and ceramic honeycomb structures has also been envisaged. In this case, crumbling problems will be completely overcome. Experimentation of both platinum and palladium catalyst systems, much more ecologically compatible than nickel, is also envisaged. It is also possible to continuously switch between a working mode wherein the primary circuit products are mainly introduced into the secondary circuit without air addition (endothermic reaction) to a working mode wherein the primary circuit products are wholly expelled from the system (so that the primary circuit only heats the secondary circuit) and further air is introduced into the secondary circuit, so that a partially endothermic reaction takes place.

In particular we envisage the possibility of continuously switching between an endothermic working mode, with 17% carbon monoxide (CO), 20% hydrogen ($H_2$), 63% nitrogen ($N_2$) and a partially endothermic working mode, with 20% carbon monoxide (CO), 40% hydrogen ($H_2$), 40% nitrogen ($N_2$). In the endothermic mode, the generator is operated in the already-mentioned fashion, as summarised in figure 1. In the partially endothermic mode, the gases flowing from the primary to the secondary circuit is intercepted so that the only aim of the primary circuit is to supply thermal energy to the secondary circuit. Methane and air are then injected into the secondary circuit, according to the ratios suggested by reaction (2). In the intermediate regimes, a percentage of the gas coming from the primary circuit less than 100% goes into the secondary circuit and, moreover, air and methane in the ratios and quantities required by the system chemical reactions are injected into said secondary circuit.

The above-mentioned membrane 25 has the aim of eliminating part of the nitrogen from either the combustion air (endothermic regime) or the air introduced into the secondary circuit (partially endothermic regime). It is then easy to see that, in such a way, it is possible to get a larger CO concentration, since, in the produced gas, less gas volume is taken up by nitrogen. Even without resorting to simulations, inspection of reactions (1) and (2) readily shows the potential advantages of employing membranes.

In the commercially available membranes, about half of the nitrogen in the air flowing through them is removed. Membrane performance turns out to be almost independent on where the working point is located between the extremes of the fully endothermic regime and the partially endothermic regime. It can be said that, by employing commercially available membranes at half their largest acceptable flow rate (which is suggested by economical reasons), about 24% CO can be achieved. Provided such membranes are operated at their largest acceptable flow rate, instead, about 27% CO can be achieved. By adding carbon dioxide in the primary and/ or secondary circuits it is possible, at least in principle, to achieve CO concentrations up to 50%.

According to the present invention, a control system for such a plant comprises a programmable logical unit, linked to the above-mentioned regulation devices. In particular, such programmable logical unit receives signals from said sensors and sends signals to the above-mentioned electrovalves.

In short, such a system comprises the above-mentioned plant working parameter regulation devices such as, for example, the flow rate of said reactants to said primary circuit and said secondary circuit and the flow rate of gas, water and air away from the plant.

On such a programmable logical unit (PLC), a mathematical model is pre-stored, aimed at calculating values for said working parameters, on the basis of a user-defined useful output gas chemical composition and flow rate.

On the basis of such calculated values, said regulating devices are controlled, so as to achieve the desired reactants flow rate into the plant and gas, water and air away from the plant.

As an example, suppose one wants to produce carbon monoxide (CO) in the plant. In this case, the reactants to introduce into the plant are methane, air, carbon dioxide and cooling water, as well. The user selects the desired CO percentage to be produced by the plant. The mathematical model, as an example, in the shape of pre-calculated tables, is stored in the PLC that controls the gas generator by inverting the function defined by the mathematical model, it is possible to find out which set of independent variables allows to reach the desired CO percentage. Having done that, the regulation devices that control reactant flow are ordered to reach the desired working point. Reactant flow is then brought to the desired level and kept constant, despite environmental fluctuations. This is achieved through controlled addition of air and methane into the secondary circuit or, alternatively, by introducing CO, produced by operating generator burners in an "unbalanced" mode, in the primary circuit.

The phases of plant control are then essentially the following:

- selecting a pre-defined useful output gas percentage and flow rate,
- elaborating a pre-stored mathematical model, so as to calculate working parameter values, associated to said reactants that, in turn, feed said primary circuit and said secondary circuit, on the basis of such pre-defined percentage,
- regulating the flow rate of such reactants in said primary and secondary circuits on the basis of such parameter values.

The produced gas may be used for metal heat treatment. Moreover by placing a membrane (shown as 46 in figure 1), along the plant outlet duct it is possible to filter out carbon monoxide, so as to produce hydrogen gas, that can be used for other purposes.

## Claims

1. Plant for gas generation, comprising a primary circuit and a secondary circuit, fed by reactants including methane, air and carbon dioxide, through a plurality of inlet ducts,

   • said primary circuit comprising a burner, wherein combustion of at least part of said reactants takes place, whose combustion products may feed a secondary reactor,
   • said secondary circuit comprising a retort, equipped with a catalyst system, wherein said combustion products, in a variable and user-definable proportion and a further part of said reactants, react in such a way as to produce said gas,

   **characterised in that**, along at least one of said inlet ducts for said reactants, wherein air is introduced, devices for filtering nitrogen out of air are placed.

2. Plant according to claim 1, wherein said reactants comprise carbon dioxide.

3. Plant according to claim 2, wherein said carbon dioxide is introduced into the plant into said secondary circuit.

4. Plant according to claim 1, wherein a heat exchanger is placed between said primary circuit and said secondary circuit.

5. Plant according to claim 1, wherein said catalyst system comprises a plurality of spheres impregnated by nickel oxide.

6. Plant according to claim 1, wherein said catalyst system comprises a cylindrical metal honeycomb structure.

7. Plant according to claim 1, wherein said catalyst system comprises a cylindrical ceramic honeycomb structure.

8. Plant according to claim 1, wherein said catalyst system comprises a plurality of spheres, impregnated by platinum.

9. Plant according to claim 1, wherein said catalyst system comprises a plurality of spheres, impregnated by palladium.

10. Plant according to claim 1, wherein said secondary circuit can continuously switch between a working mode wherein an endothermic chemical reaction takes place to a working mode wherein a partially endothermic chemical reaction takes place.

11. Plant according to claim 1, wherein porous graphite blocks are placed into the secondary circuit retort, so as to increase the produced carbon monoxide percentage.

12. Plant for gas generation, comprising a primary circuit and a secondary circuit, fed by reactants including methane, air and carbon dioxide, through a plurality of inlet ducts,

    • said primary circuit comprising a burner, wherein combustion of at least part of said reactants takes place, whose combustion products may feed a secondary reactor,
    • said secondary circuit comprising a retort, equipped with a catalyst system, wherein said combustion products, in a variable and user-definable proportion and a further part of said reactants, react in such a way as to produce said gas,

    **characterised in that** at least one of said reactants comprises carbon dioxide.

13. Method for controlling a gas generation plant, said plant comprising a primary circuit and a secondary circuit fed by reactants, **characterised in that** it includes the following steps:

    • selecting a pre-defined useful output gas percentage and flow rate,
    • elaborating a pre-stored mathematical model, so as to calculate working parameter values, associated to said reactants that, in turn, feed said primary circuit and said secondary circuit, on the basis of such pre-defined percentage,
    • regulating the flow rate of such reactants in said primary and secondary circuits on the basis of such parameter values.

14. Method according to claim 13, wherein said reactant flow rate regulation step comprises the control of regulation devices comprising throughput sensors and electrovalves.

15. Method according to claim 13, wherein said mathematical model is stored in a programmable logical unit, in the shape of at least a table.

16. Method according to claim 13, wherein said mathematical model is stored in a programmable logical unit, in the shape of a mathematical algorithm, then employed by the logical unit.

17. System for controlling a gas generation plant, said plant comprising a primary circuit and a secondary circuit, fed by reactants **characterised in that** they comprise:

- plant working parameter regulation devices,
- a programmable logical unit that controls such regulation devices and comprises a pre-stored mathematical model, aimed at calculating the values of said working parameters, on the basis of a user-definable useful gas percentage.

**18.** System according to claim 17, wherein said regulation devices comprise throughput sensors and electrovalves.

**19.** System according to claim 17, wherein said mathematical model comprises at least a data table.

**20.** System according to claim 17, wherein said mathematical model is stored in a programmable logical unit in the shape of a mathematical algorithm, then employed by the logical unit.

Fig. 1

# Fig. 2

O2=2u.a. - T=1300 K - Air with 21 % of O2

product gas composition (%)

CH4 of primary circuit (u.a.) - P=1.015 atm, V=481.175 l

Legend: CH4, CO2, H2O, CO, O2, H2, N2

# Fig. 3

CO2p,H2Op=0.41,0.1 u.a. - T=1300K - Air with 21 % of O2 -

product gas composition (%)

CH4 of secondary circuit (u.a.) - P=1.055 atm, V=75.95 l

Legend: CH4, CO2, H2O, CO, O2, H2, N2

EP 1 466 864 A2

# Fig. 4

Cs, CO2p, H2Op=10,0.41,0.1 u.a. - T=1300 K - Air with 21 % of O2

CH4 of secondary circuit (u.a.) - P=1.055 atm, V=75.95 l

EP 1 466 864 A2